Europäisches Patentamt

European Patent Office

Office européen des brevets

(11) Publication number: **0 040 441**
**A2**

# (12) EUROPEAN PATENT APPLICATION

(21) Application number: **81200452.1**

(22) Date of filing: **24.04.81**

(51) Int. Cl.³: **A 23 B 4/02**

(30) Priority: **15.05.80 IT 4683880**

(43) Date of publication of application:
**25.11.81 Bulletin 81/47**

(84) Designated Contracting States:
**AT BE CH DE FR GB LI LU NL SE**

(71) Applicant: **BE.CO. S.n.c. di Bertani, Colli & C.**
**8, Via Galileo Galilei**
**I-42027 Montecchio (Reggio Emilia)(IT)**

(72) Inventor: **Umberto, Mora**
**48, Via Valparma**
**Panocchia (Parma)(IT)**

(74) Representative: **Corradini, Corrado**
**4, Via Sessi**
**I-42100 Reggio Emilia(IT)**

(54) Automatic continuous cycle machine for rubbing, massaging and salting raw hams in general.

(57) Machine for rubbing, massaging and salting crude hams, comprising a horizontal working table 23, from which there emerge pusher members 14 for the hams 99 to be salted, its central zone being superposed by a framework 22 along which, from upstream to downstream, there are provided water atomising means 21, 20; first swinging means 40, 43 for rubbing and massaging the upper longitudinal fascia of the rind of hams resting on their flat side; two rotating star members 63 for rubbing the longitudinal side fascias of said rind; second swinging means 65, 43a for rubbing and massaging the upper longitudinal side fascias of the ham rind; a plate 79 moving with reciprocating rectilinear movement along the working table for rubbing and massaging the flat side of the hams; idle rollers 73, 71, 68 positioned variously relative to the working table and towards which they are elastically urged; and an upper hopper 24 for the dry salt provided with adjustable feed means 34 for distributing salt to said first and second swinging means, and to said rotating star members.

Fig.1.

- 1 -

AUTOMATIC CONTINUOUS CYCLE MACHINE FOR RUBBING, MASSAGING
AND SALTING RAW HAMS IN GENERAL

This invention relates to a machine for automatically rubbing,
massaging and salting raw hams in general, on a continuous
basis.

It is well known that before being despatched to the
seasoning stores, raw hams must of necessity be subjected to
an intermediate salting operation, which consists of rubbing
only the ham rind with moist salt in order to break or cut
into the thin fat film which normally covers the rind, and to
initiate the process of salt penetration into the meat, after
which a layer of dry salt is formed on the top of the rind
and on the meat located around the bone.

Finally, the hams salted in this manner are placed in a
suitable cold room where they remain for a certain period of
time.

Up to now, raw hams have generally been salted by a purely
manual method, and only in certain cases is an automatic
energetic initial massaging operation carried out which
precedes the actual salting.

Consequently, in this sector there is a profound need for an
automatic ham salting machine, because at the present time
an excessive number of highly specialised personnel is

0040441

required for said operation.

The main object of the present invention is to provide an automatic machine which enables raw hams in general to be rubbed, massaged and salted correctly on a continuous cycle basis.

The basic idea of the invention is to provide, on a horizontal working table along which the raw hams to be salted are transferred by suitable pushers, a set of rubbing and massaging stations disposed in cascade and served by respective salt distributor-dispenser units, which by means of suitable members are arranged to successively involve different adjacent longitudinal parts of the rind of the hams.

According to the invention, these latter are loaded flat on said working table, which is provided longitudinally with a central slot from which said pushers emerge to act on the hams on the bone side, so that the hams become inserted into the massaging stations with their shank at the front.

Advantageously, atomiser means are disposed immediately upstream of said stations for the surface wetting of the hams over which the salt is subsequently to be distributed.

According to the invention, the first massaging and rubbing station is in the form of a slide block swinging in a vertical longitudinal plane and with an adjustable operational period, its base, which is designed to come into contact with the ham, being convex and divided longitudinally into two, each half being occupied by an idle roller surface, said two roller surfaces being driven with longitudinal reciprocating rectilinear motion in opposite directions, and being arranged to act on the upper central longitudinal fascia of the ham rind.

Downstream of said first station there are provided two rotating star members of vertical axis, the component elements of which are elastically deformable and are elastically loaded towards the central longitudinal zone of the working table, and are arranged to act on the longitudinal side fascias of the ham rind.

Said star members are followed by a horizontal plate disposed in contact with the working table and driven with reciprocating rectilinear motion along this latter, its suitably hollowed upper face being arranged to massage the flat part of the hams, with the aid of two transverse pads disposed in proximity to the inlet and outlet edges of the plate and controlled by the reciprocating movement of this latter.

Said mobile plate is superposed by two swinging rubbing-massaging slide blocks of the same type as that provided in the first rubbing and massaging station, and arranged to act on the two upper longitudinal side fascias of the ham rind.

Finally, to complete the massaging members of the invention there is provided a set of rollers which are elastically loaded towards the central longitudinal zone of the working table and are variously positioned with respect to this latter and to each other.

The advantages and constructional characteristics of the invention will be more apparent from the detailed description given hereinafter with reference to the figures of the accompanying drawings which illustrate one preferred embodiment thereof by way of non-limiting example.

Figure 1 is a side view of the invention.

- 4 -

0040441

Figure 2 is a side view of the central zone of the machine to an enlarged scale.

Figure 3 is a plan view of the central zone of the machine but with the salt hopper excluded.

Figure 4 is a plan view of the salt hopper.

Figure 5 is a section on the line V-V of Figure 4.

Figure 6 is a plan view of one of the rubbing-massaging slide blocks.

Figure 7 is a section on the line VII-VII of Figure 6.

Figure 8 is a longitudinal section through the machine working table to an enlarged scale, taken at the mobile massaging plate.

Figure 9 is a plan view of the downstream end of the machine.

Figure 10 is a front perspective view of one of the ham pusher members.

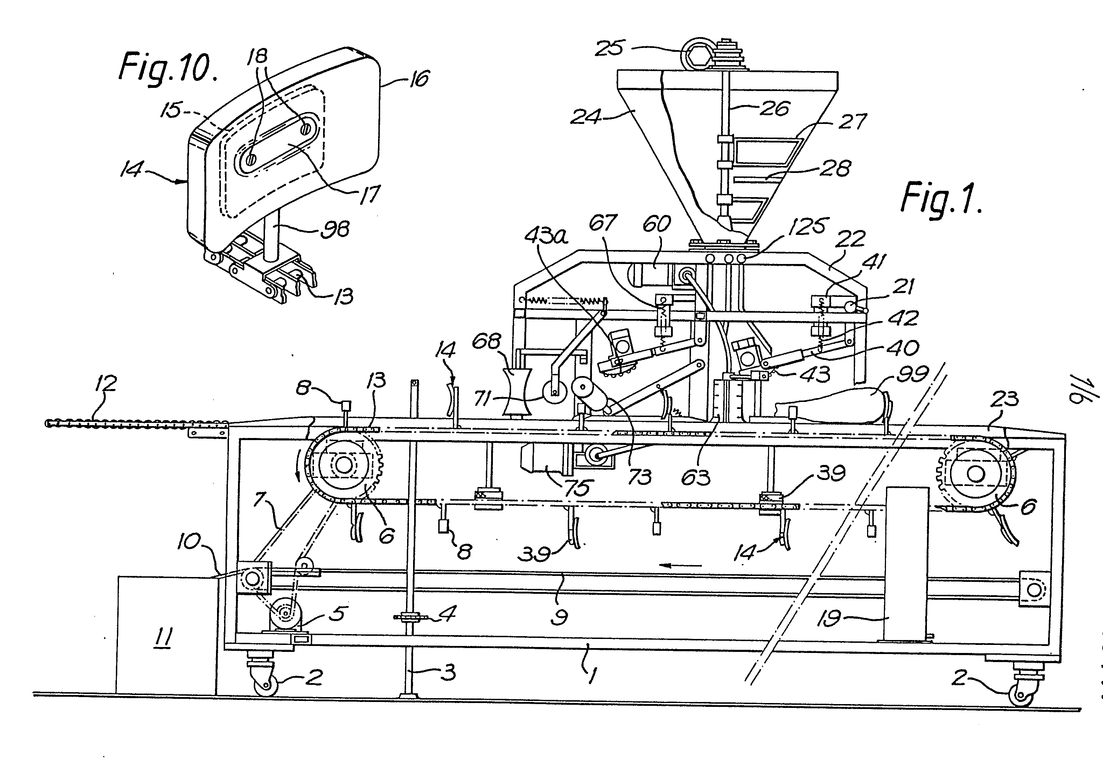

From said figures, and in particular Figure 1, it can be seen that the machine according to the invention comprises a horizontally extending welded tubular frame 1, which is fitted with castors 2.

A framework 22 branches from the central zone of the top of the frame 1, and above it there lies a hopper 24 for containing dry salt.

The working table 23 is fixed to the upper horizontal part of the frame 1, and is composed of two longitudinal plates

- 5 -

0040441

which are disposed coplanar and slightly spaced apart in order to define a small central slot, the purpose of which will be described hereinafter.

With reference to the said Figure 1, the right hand zone of the working table 23 constitutes the loading station for the raw hams to be salted 99, while the left hand end of the working table 23 constitutes the discharge zone for the already salted raw hams.

As can be clearly seen, the said two ends of the working table 23 are suitably tapered in order to constitute two chutes.

A suitably motorised roller table 12 is disposed projecting from the frame 1 at the discharge end of the working table 23, and when the machine is not working it can be swung downwards into a vertical position.

A chain 13 is disposed below the working table 23 in vertical alignment with the longitudinal slot in this latter, and passes over two sprocket wheels 6 which are rotatably mounted below the opposing ends of the working table 23.

As can be clearly seen from Figure 9, the upper straight portion of the chain 13 is suitably supported.

A set of equidistant forks 8 (Figure 9) branches from the links of the chain 13.

The forks 8 are designed to support the shanks of the hams 99 to be salted, and the distance between two consecutive forks 8 is such as to be able to contain any length of ham 99.

At this point it should be noted that the machine according
to the invention is also suitable for rubbing, massaging
and salting hams of the San Daniele type which, as is known,
also comprise the respective trotters.

Breech pusher units 14, which are described hereinafter in
greater detail with reference to Figure 10, are disposed at
a suitable distance apart between the forks 8, which are
arranged transversely to the chain 13.

Each of said breech units 14 is composed of a shank 98
branching from the chain 13, and carrying at its free end
a dished plate 15.

Against the active face of this latter there rests a dished
sector 16 disposed transversely to the chain 13, its active
face being provided centrally with a recess housing a
clamping plate 17 traversed by two screws 18 with countersunk heads, which are screwed into the underlying dished
plate 15.

The dished sector 16 is advantageously constructed of a
suitable soft synthetic material or rubber.

Again with reference to the accompanying Figure 1, it can be
seen that the lower straight portion of the chain 13 is
supported by suitable channel supports 39 branching from the
frame 1.

On the shaft to which the rear sprocket wheel 6 is keyed
there is fixed a sprocket wheel about which there passes a
chain 7 driven by a variable speed motor 5, this latter
disposed at the base of the rear end of the frame 1.

Said chain 7 also passes over a further sprocket wheel which is keyed on to the transverse end return shaft of a horizontally extending conveyor belt 9, disposed below the chain 13 in order to collect the salt which falls from the overlying working table 23.

At the rear return position of the conveyor belt 9 there is provided a scraper chute 10, the free end of which lies above a suitable collection container 11.

Two threaded columns 3 are provided to the side of the frame 1, and are each fitted with a sprocket wheel 4 over which a chain passes.

The upper end of one column 3 is provided with a key seat for operating the pair of columns in order to rigidly lock the machine to the floor by raising from this latter the downstream pair of castors 2.

It should be noted that the presence of the threaded columns 3 is also advantageous because it allows the level of the free end of the roller table 12 to be adjusted to the same level as the working tables of subsequent apparatus on to which the already salted raw hams are discharged.

Within the front zone of the frame 1 there is provided a pressure vessel 19 for containing water for the initial wetting of the hams 99 to be salted.

A conduit branches from the base of the pressure vessel 19, and extends into a valve 21 disposed at the top of the zone upstream of the framework 22.

A set of conduits branches from the valve 21, for feeding radially disposed atomiser nozzles 20, positioned towards the central zone of the initial part of the working table 23.

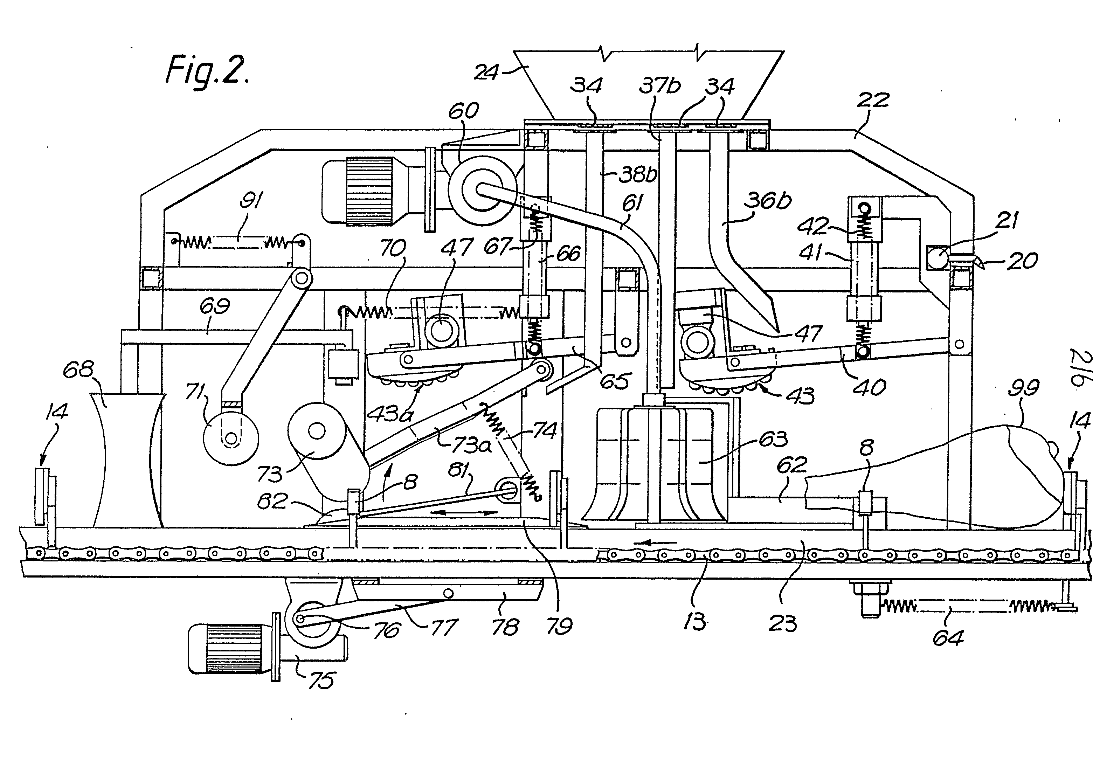

With reference to Figure 2, it will be noted that immediately downstream of the atomiser nozzles 20, an arm 40 with its free end of fork configuration is hinged to the high part of the framework 22, and is designed to swing in the vertical plane passing through the longitudinal slot of the working table 23.

For this purpose, a single acting pneumatically operated cylinder-piston unit 41 is provided, its rod being connected to the swinging arm 40, while its casing is hinged upperly .to the framework 22.

A pair of tension springs 42 is provided for returning the swinging arm 40.

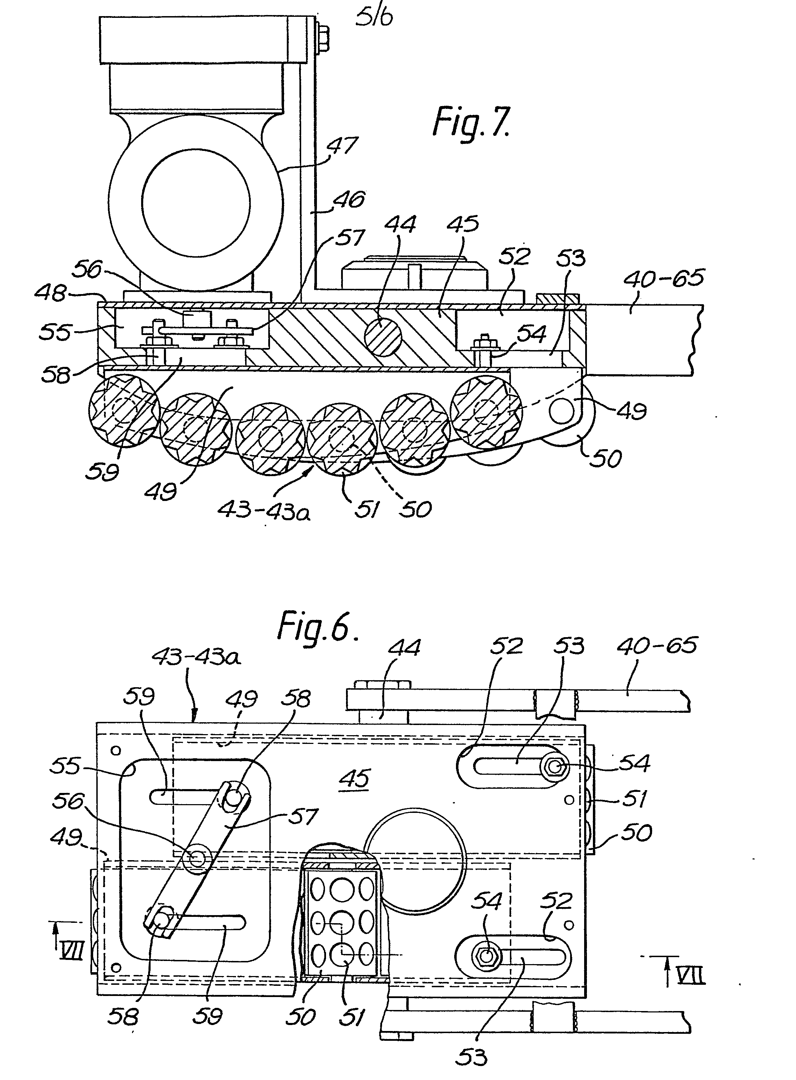

The end fork of the swinging arm 40 is disposed downstream of the unit 41, and within it there is mounted a slide block 43, which will be described with reference to Figures 6 and 7.

.These latter show that the slide block 43 is composed of a member 45 mounted by way of a transverse pin 44 to rotate relative to the arms of the end fork of the swinging arm 40.

It should be noted that the range of rotation of the slide block 43 relative to said fork is limited by two stops, not shown, arranged to interfere with the fork arms.

The aforesaid limited range of rotation is provided in order to enable the slide block 43 to advantageously adapt to the different configurations of the top part of the hams 99.

With reference to said Figures 6 and 7, the member 45 is

covered upperly by a metal plate 48 against which there is clamped a right angled element 46, of which the branch orthogonal to the member 45 is disposed downstream of the pin 44.

The lower face of the member 45 is provided with two adjacent prismatic slide seats, which are parallel and are symmetrical about the plane of swing of the arm 40.

Each slide seat houses a frame 49 convex towards the working table 23.

Each frame 49 supports six transverse idle rollers 50, the cylindrical surfaces of which are provided with a plurality of conical impressions 51 distributed in radially equidistant rows.

The member 45 is provided upperly, in the end zones of its front part, with two slot-like longitudinal recesses 52, with a central slot 53 in their base.

A pin with an enlarged head 54 and branching from the corresponding frame 49 is slidably inserted through the central slot 53.

The rear ends of the two frames 49 are also each provided with an enlarged head pin 58 which extends through a longitudinal slot 59 in the member 45 and into a cavity 55 provided in one end of the member 45.

The dimensions of the cavity 55 are such that it covers both the slots 59, and it houses a rocker arm 57.

The opposing ends of this latter are of fork shape and are mounted over cylindrical stems branching from the enlarged ends of the pins 58.

The central zone of the rocker arm 57 is keyed on to an orthogonal shaft 56 which is connected to a pneumatic motor 47 supported by the orthogonal branch of the right angled element 46.

The pneumatic motor 47 is of the type which moves with reciprocating rotary movement.

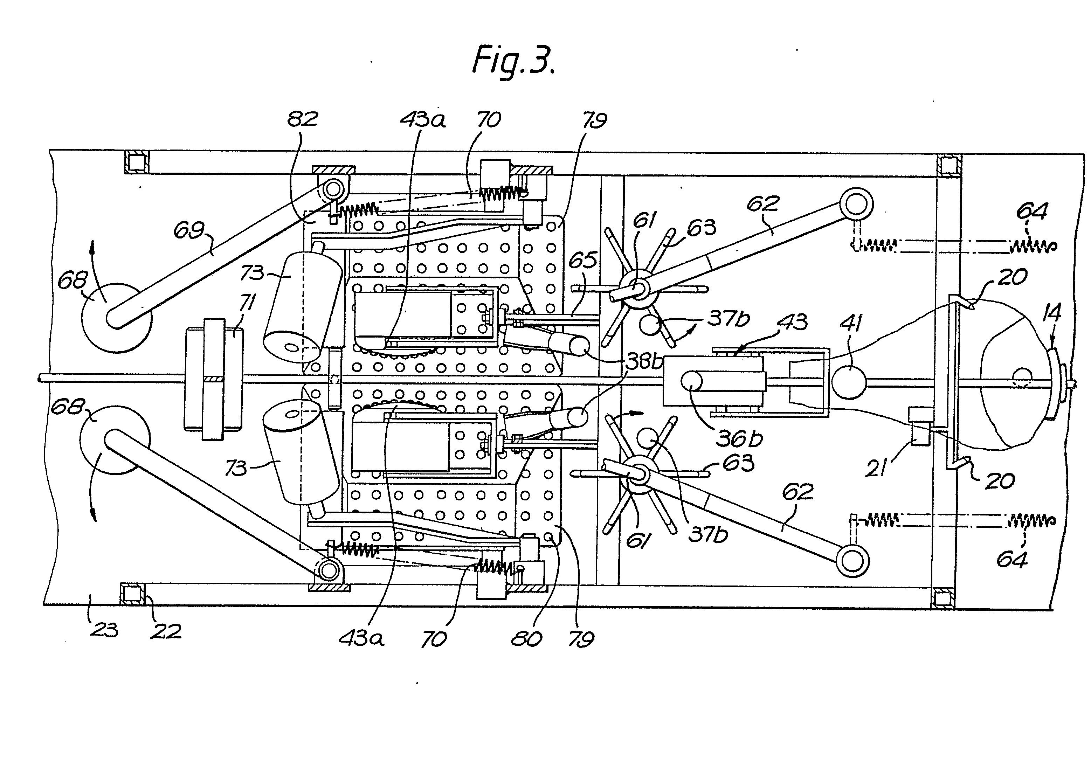

As shown in Figures 2 and 3, below the swinging arm 40 and to the side of the working table 23 there are provided two right angled levers 62 which are hinged to the frame 1 and are elastically loaded towards the central longitudinal zone of the working table 23 by two tension springs 64.

The free ends of the right angled levers 62 extend towards the downstream zone of the machine to slightly pass beyond the slide block 43 where they support a rotating star member 63.

More precisely, this latter is composed of a central shaft mounted rotatably relative to the corresponding right angled lever 62, and from which there branches a set of radially equidistant longitudinal blades which are all the same and are constructed of a suitable soft material so as to be elastically deformable.

In addition, the longitudinal extension of each blade comprises a set of transverse cuts to enable these blades to adapt to the various lateral shapes of the hams 99 to be salted.

Moreover, from the lower edge of each blade of the pair of star members there branches a concave arcuate projection, as shown in said Figures 2 and 3, which is arranged to make contact with the arcuate part of the rind between the longitudinal side fascias and the flat portion of said rind.

The rotation of the star members 63 takes place in the opposite direction to the conveying movement of the hams 99, and is controlled by two flexible sheathed shafts 61 driven by a double exit geared motor 60 which is fixed below the upper horizontal elements of the framework 22.

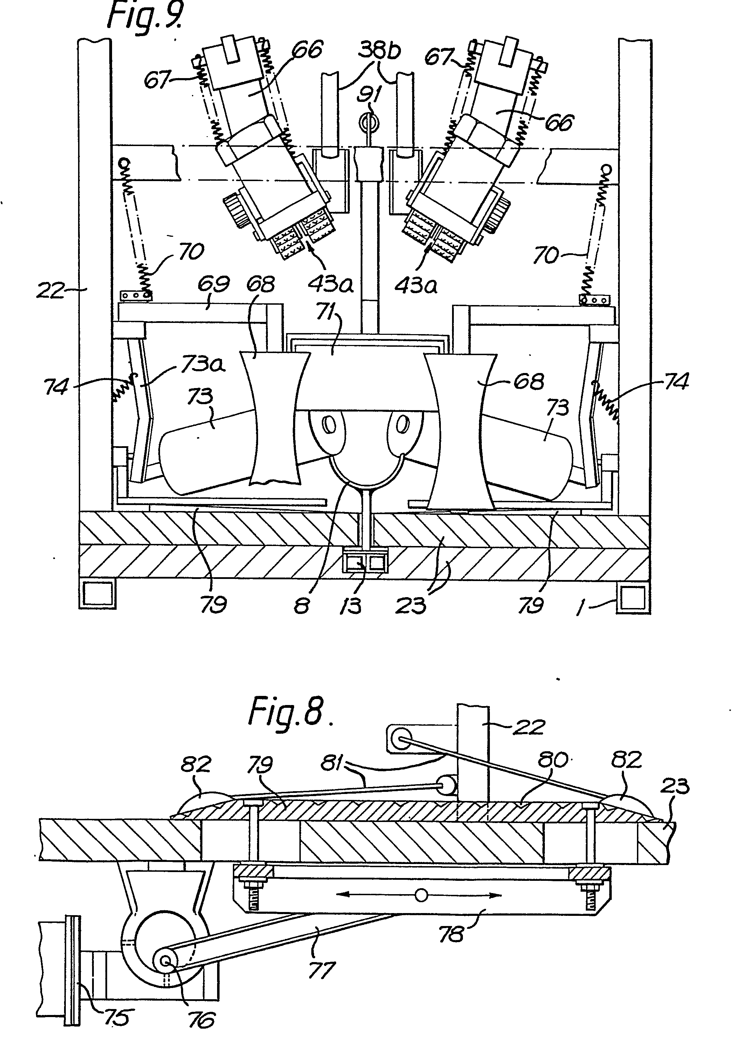

Immediately downstream of the rotating star members 63, a longitudinal portion of the working table 23 is covered by a rubbing and massaging plate 79 which, as shown in Figures 3 and 8, is composed of two adjacent sectors which leave the longitudinal slot of the working table 23 uncovered.

As in the case of this latter, the plate 79 is constructed of a suitable synthetic material, and its opposing transverse edges comprise two chutes which smoothly meet the active surface of the working table 23.

From the accompanying Figures 8 and 9, when viewed in cross-section, it can be clearly seen that each component sector of the plate 79 has a thickness which decreases in moving from the corresponding side of the machine towards the longitudinal slot in the working table, where said thickness practically disappears.

On the upper face of the plate 79 there is provided a plurality of recesses 80 designed to retain small quantities of salt.

On the transverse exit edges of the two sectors which comprise the massaging plate 79, there rests a pair of pads 82, each of which projects relative to an arm 81 disposed on the corresponding machine side panel, which is hinged to the machine frame.    Although not shown in the other figures, a second pair of pads 82 is provided at the entry edges of the massaging plate 79 (see Figure 8).

In a like manner to that described for the two sectors comprising the massaging plate 79, the facing ends of the pairs of pads 82 are also slightly spaced apart in order to allow passage of the forks 8 and breech units 14.

The lower face of each pad 82 is flat, whereas its upper face is slightly arcuate.

As will be described in detail hereinafter, the plate 79 is driven with reciprocating rectilinear motion parallel to the longitudinal extension of the machine, and its maximum stroke is slightly less than the transverse dimension of the pads 82 in order to prevent damaging interference between said elements.

Bolts branch from the massaging plate 79 and pass through suitable slots provided in the working table 23, to connect below the working table 23 to a longitudinal slide 78.

This latter is driven by a connecting rod 77, moved by an eccentric 76 which is driven by a geared motor 75 fixed below the upper horizontal elements of the machine frame 1.

Two arms 65, symmetrically disposed about the vertical longitudinal plane of symmetry of the machine, are disposed so that they practically lie above the two sectors comprising the massaging plate 79, as shown in Figures 2 and 3.

More precisely, the two arms 65 are hinged in a zone of the framework 22 disposed upstream of the massaging plate 79, and their fork-shaped free ends are each provided with a slide

- 13 -                                    0040441

block 43a completely identical to the slide block 43 described with reference to Figures 6 and 7.

As described for the slide block 43, the slide blocks 43a can rotate slightly relative to the corresponding support fork in order to adapt to the different shapes of the hams 99.

In addition, between each arm 65 and the corresponding fork there is provided a longitudinal hinge which allows a limited range of transverse rotation of the fork relative to its arm 65.

As can be clearly seen from Figure 9, the two arms 65 can swing in two subvertically inclined planes symmetrical about the plane of longitudinal vertical symmetry of the machine, these planes converging into the longitudinal slot in the working table 23.

Each arm 65 is connected to the rod of a pneumatically operated single acting cylinder-piston unit 66, hinged to a bracket branching from the framework 22.

Two suitable tension springs 67 are provided for returning each arm 65 into its raised position.

Two profiled levers 73a are hinged to the sides of the framework 22 beside the massaging plate 79, and extend towards the transverse exit edge of the massaging plate 79 where they carry, rotatably mounted, two cylindrical rollers 73 constructed of a suitable synthetic material.

These latter are disposed obliquely to the working table 23, and are disposed symmetrically about the longitudinal slot in this latter.

- 14 -

0040441

More precisely, the two rollers 73 are inclined upwards towards the upstream region of the machine, so that they assume an inverted V configuration.

The rollers 73 are elastically urged towards the working table 23 by two springs 74 which act on the profiled levers 73a.

Immediately downstream of the pair of rollers 73 there is provided a further cylindrical roller which lies horizontally and is disposed transversely to the working table 23.

The horizontal roller 71, which can float in a longitudinal vertical plane, is also elastically urged towards the working table 23 by a spring 91.

Finally, at the rear end of the framework 22 there are provided two vertical rollers 68 symmetrically disposed about the longitudinal vertical plane of symmetry of the invention, and rotatably mounted at the free ends of two levers 69 which are pivoted to the framework 22.

The two vertical rollers 68 are elastically urged towards the central longitudinal zone of the working table 23 by two tension springs 70.

As can be clearly seen in Figure 9, in contrast to the rollers 73 and 71, each vertical roller 68 is configured as a hyperboloid of rotation.

Obviously the cross-sections of said configuration are circular, but according to the invention these latter can also be of polygonal type for a more energetic and/or deep massage.

With reference to Figure 1, it can be seen that the hopper 24 for containing the dry salt is composed of a cone-frustum chamber with its minor base facing downwards, at its top there being disposed a geared motor 25 for rotating a vertical shaft 26 coaxial with said chamber.

Mixing blades 27 of suitable shapes and dimensions are provided orthogonal to the shaft 26, and are suitably distributed radially relative to the shaft 26.

In addition, fixed blades 28 branching from the inner surface of the salt containing chamber are disposed between the mixing blades 27.

In addition, at the base of the shaft 26 there are provided radial fins which are practically in contact with the base of the chamber 24 in order to prevent piles of salt forming on this latter to oppose passage of the salt through the openings provided in said base.

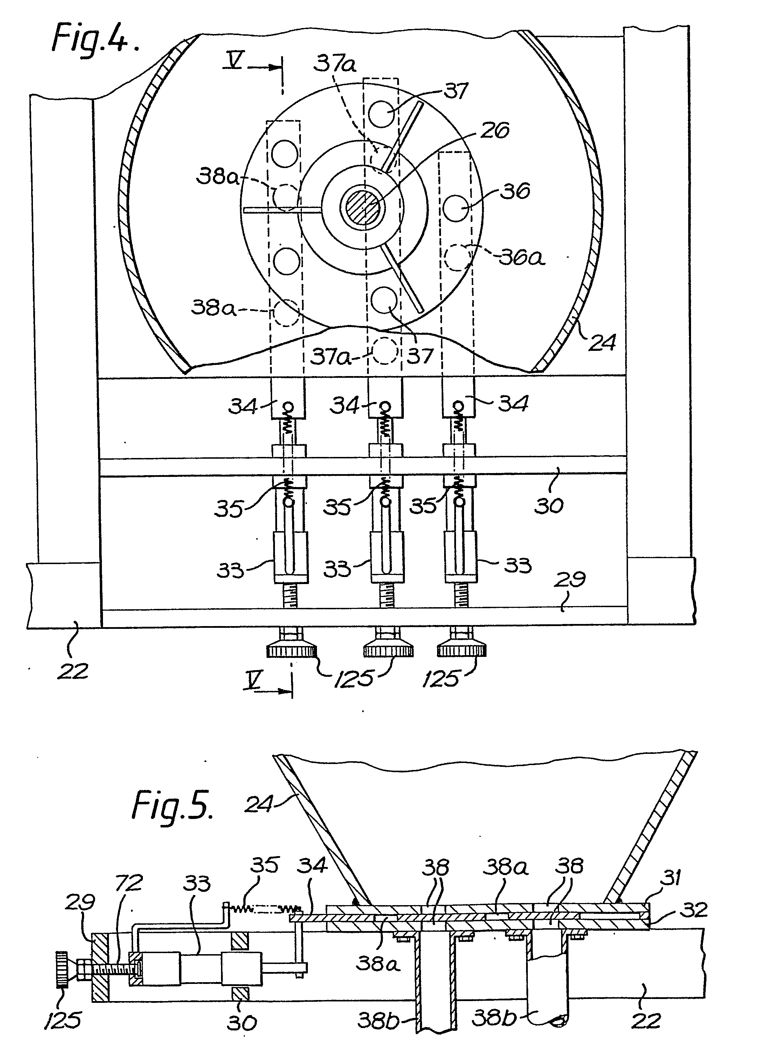

From Figure 5 it can be seen that the base of the containing chamber 24 is essentially constituted by a disc 31, below which a second disc 32 is disposed at a short distance therefrom.

Three plates 34, disposed transversely to the underlying working table 23, are slidably inserted between the two discs 31 and 32.

With reference to Figure 4, it will be seen that the right hand plate 32 is provided with a through bore 36a, which is designed to align, in a more or less substantial manner, with two corresponding through bores 36 provided in the discs 31 and 32.

The intermediate plate 34 is provided with two through bores 37a designed to align, completely or partly, with corresponding through bores 37 provided in the discs 31 and 32.

Finally, the left hand plate 34 also comprises two through bores 38a, to which through bores 38 in the discs 31 and 32 correspond.

Two flexible tubes 38b are connected to the lower mouth of the through bores 38 of the disc 32, and extend towards the rear zone of the framework 22 until their free ends reach slightly upstream of the pair of slide blocks 43a.

In the same manner, two flexible tubes 37b branch from the through bores 37 of the disc 32, and extend to lie above the most inner blades of the pair of rotating star members 63.

Finally, a flexible tube 36b extends from the through bore 36 of said disc 32, and is designed to discharge the salt immediately upstream of the slide block 43.

As clearly shown in the accompanying Figure 5, each plate 34 is connected to the rod of a single acting pneumatic cylinder-piston unit 33, slidably inserted into a through cavity provided in an element 30 of the framework 22.

A suitable tension spring 35 is provided for the return of the rod of the unit 33.

A threaded rod 72, which is screwed into an element 29 of the framework 22, is rotatably mounted on the rear end of each cylinder-piston unit 33.

External to said element 29, each threaded rod 22 is fitted with an adjustment knob 125 and a nut-locking nut pair for locking the rod on the element 29.

It is apparent that the provision of the threaded rods 72 enables the extent by which the bores 38a, 37a and 36a are superposed on the respective bores 38, 37 and 36 to be adjusted as required.

At this point, it should be noted that at one of the ends of the shaft on which the sprocket wheel 6 is keyed, there is provided a plurality of adjustable cams designed to control the operation of the various devices of which the invention is composed.

More precisely, each of these cams is of the double plate type, the components of which can be adjusted angularly in order to adjust the period of operation of the corresponding devices.

The aforesaid cams are designed to control the valve 21, the unit 41 and the pneumatic motor 47 of the slide block 43, the three units 33, the pair of units 66 and the pair of pneumatic motors 47 provided for the two slide blocks 43a.

The invention illustrated and described heretofore operates in the following manner.

It should firstly be noted that the present machine can also be used as a simple rubbing-massaging machine in addition to a salting machine, by simply not feeding the salt and water.

The raw hams 99 to be salted are loaded on to the working table 23 flat side down, with the shank inserted into a fork 8, its wide end being made to adhere against the following breech unit 14.

In this manner, each ham 99 has its shank pointing towards the downstream zone of the working table 23, and this shank is kept slightly raised from the working table for correct feed to the massaging plate 79.

The elastic sector 16 disposed on each breech unit 14 prevents the exposed meat located at the wide part of the hams from becoming damaged.

During the feed of the ham, the valve 21 is caused to open, so that atomised water jets emerge from the nozzles 20 to completely wet the ham, and automatically close when the ham has passed.

At the same time, the cylinder-piston unit 41 is made to lower its slide block 43, which comes into contact with the initial part of the shank of the ham 99, and the right hand cylinder-piston unit 33 is also activated so that the salt is allowed to fall in front of the slide block 43. The pneumatic motor 47 is then operated to rock the rocker arm 57, which itself causes the pair of roller frames 49 of the slide block 43 to slide in a reciprocating manner in two opposing directions, to rub and massage the upper longitudinal fascia of the rind of the ham 99.

That part of the ham which has passed downstream of the slide block 43 is immediately contacted by the two star members 63, the elastically deformable blades of which carry out the rubbing and massaging of the side longitudinal fascias of the ham.

When the initial part of the ham shank becomes inserted between the two star members 63, the delivery of salt through the pair of tubes 37b is automatically started, and continues until the ham has completely passed through.

Feed to the cylinder-piston unit 41 is stopped when the slide block 43 is located at the end of the rind, and at the same time the delivery of salt from the tube 36b and the motor 47 stop.

Although not stated previously, it should be noted that the cylinder-piston units 41 and 66 are provided with suitable adjustable overpressure valves to enable the respective slide blocks 43 and 43a to adapt to the shape of the hams 99, or to adjust the working pressure of the slide blocks 43 and 43a according to the ham characteristics.

On leaving the pair of star members 63, the ham is located on the plate 79, which carries out the rubbing, massaging and salting of the flat part of the ham in that grains of salt are present in the recesses 80 of the plate 79. The reciprocating movement of the plates starts and stops on the command of suitable means, and continues during the passage of the ham.

When a ham 99 is on the plate 79, the two slide blocks 43a are lowered, and the salt is fed through the two tubes 38b.

In this manner, the rubbing, massaging and salting of the upper side fascias of the ham rind are also carried out.

When the ham is about to leave the mobile plate 79, the slide blocks 43a are automatically made to rise, with simultaneous stoppage of the motors 47, and the feed of salt through the tubes 38b is also stopped.

Downstream of the mobile plate 79, the ham is massaged in succession by the pair of oblique rollers 73, the horizontal roller 71 and the pair of vertical rollers 68, which make contact with practically its entire upper surface.

The stages heretofore described proceed in the same manner for each ham loaded on to the working table 23, and the excess salt falls below this latter to be collected by the conveyor belt 9, which discharges it into the collection container 11.

PATENT CLAIMS

1. An automatic continuous cycle machine for rubbing, massaging and salting hams, characterised by comprising, on a working table constituting a runway for the hams and provided with means for dragging them with their shank positioned frontwards, suitable upper rubbing means distributed along the transverse extension of the ham and each constituted by a slide block disposed on a longitudinally swinging lever driven with reciprocating motion, and having its lower active surface constituted by at least one plane of idle rollers provided with suitable cavities, lateral rubbing means constituted by a star member of elastic material rotating about its vertical axis, and lower rubbing means constituted by a plate provided with cavities and reciprocating longitudinally, to constitute a portion of said runway, water atomiser means being provided upstream of said rubbing means, and dry salt feed means disposed downstream of said water atomising means and upstream of each individual rubbing means, together with an assembly of idle massaging rollers elastically pressed against the ham in transit on the runway and disposed downstream of said rubbing means, and a lower belt for recovering and recycling the excess salt.

2. A machine as claimed in claim 1, characterised in that the means for dragging the hams are constituted by a set of front forks for sustaining the shank, and between which there is disposed a set of rear dished breech units for pushing and protecting the lean part of the ham.

3. A machine as claimed in claim 1, characterised in that said upper rubbing means for the ham rind comprise, swinging at the end of a fork-shaped lever:
- a central member provided lowerly with two parallel prismatic adjacent seats facing the working table, and which makes contact with the ham and is provided lowerly with:

- two frames which are inserted into said two prismatic seats, on which they can slide with reciprocating motion; each frame acting as a support for:

- a surface composed of idle transverse rollers provided superficially with cavities;

- a rocker arm disposed above said central member, its opposing ends being linked to the heads of the underlying frames;

- an overlying pneumatic motor of reciprocating rotary movement for controlling said rocker arm;

said fork lever being caused to swing by means of a single acting cylinder-piston unit which cooperates with elastic return means.

4. A machine as claimed in claim 1, characterised in that said lateral rubbing means of star configuration are composed of a vertical shaft rotatably mounted on a lever elastically urged towards the central zone of the working table, from said shaft there branches a set of radially equidistant elastic longitudinal blades with their lower edges each provided with an arcuate concave projection, the longitudinal extension of which comprises a group of transverse cuts; on said vertical shaft there being mounted a flexible sheathed wire which is controlled by a suitable drive unit.

5. A machine as claimed in claim 1, characterised in that the mobile plate constituting the lower rubbing means is constituted by two adjacent sectors which leave the central longitudinal zone free, and are connected below the working table to a slide which is connected by a connecting rod to a motorised crank.

6. A machine as claimed in claim 1, characterised in that said means for wetting the hams comprise a set of atomising nozzles disposed radially to overlie the initial part of the working table, and are connected to a valve which is connected in its turn to a water pressure vessel housed in the frame.

7. A machine as claimed in claim 1, characterised in that said dry salt feed means comprise an upper hopper with an internal stirring device and provided at its base with a plurality of feed valves, each of which, by way of a conduit, feeds dry salt in front of each of the said rubbing means.

Fig.10.

Fig.1.

1/6

0040441

Fig.2.

Fig.3.

3/6

0040441

4/6

Fig.4.

Fig.5.

*Fig.7.*

47

46

57

56

48

55

58

44 45 52 53 40-65

54

49

50

59 49 43-43a 51 50

*Fig.6.*

43-43a 44 52 53 40-65

59 49 58

55

56

49

57

45

54

51

50

54 52

VII

58 59 50 51

VII

53

Fig.9.

Fig.8.